# EUROPEAN PATENT APPLICATION

(11) **EP 1 466 568 A2**
(43) Date of publication of application: **13.10.2004**
(21) Application number: 04425219.5
(22) Date of filing: 30.03.2004
(51) Int. Cl.: A61C 1/00

(54) **A water circuit for dental equipment**

(30) Priority: 11.04.2003 IT BO20030215
(71) Applicant: CASTELLINI S.p.A., 40013 Castel Maggiore (Bologna) (IT)
(72) Inventor: Castellini, Franco, 40124 Bologna (IT)
(74) Representative: Lanzoni, Luciano

(57) **Abstract**

A water circuit for dental equipment such as dental units comprises at least a user fluid (F) supply line (1) connected, at one end, to a mains water supply (2) and, at the other end, at least to a first circuit branch (4) for supplying items of equipment (5) at least comprising a plurality of dental handpieces. At least the fluid supply line (1) and the first branch (4) is fitted with devices (6) for checking, regulating, or turning on/shutting off the flow of the fluid (F). At least one of the devices (6) for checking, regulating, or turning on/shutting off fluid flow is mounted in series on the fluid (F) supply line (1) or on the first branch (4), in such a way that it is located directly in the stream of the fluid (F) flowing in the supply line (1) and in the first branch (4).

## Description

The present invention relates to a water circuit for dental equipment such as dental units.

In current dental equipment it is now routine practice for the water system, which supplies the fluids used by the equipment and by patients (water or physiological saline for tumblers and handpieces), or by consumer units (swilling water for the spittoon), to be subjected to disinfection and sterilising treatment to maintain the sterility of the system, especially inside the fluid conduits, both during and between patient treatment sessions.

Over time, with increases in general standards of hygiene and with dental apparatus and equipment becoming more and more "fragile", many improvements have been made not only to the products used for these sterilising treatments but also to the internal structures of the dental equipment, in order to achieve increasingly high levels of hygiene.

At a constructional level, the basic structure of the water circuit of a dental unit typically comprises a first main line supplying water from the mains to a plurality of branches or circuit legs leading to the operating and accessory equipment of the dental unit. Several systems, based on varied methods differing also according to purpose, have been designed in order to improve the functioning and disinfection of the water circuits. The main and secondary branches of the circuit are fitted with devices for regulating, turning on and checking fluid flow within the circuit.

For example, there are check valves (or suckback valves) on each branch that supplies a dental handpiece (or upstream of the branch) designed to suck the fluid back from the handpiece so as to prevent dripping. Other devices on the circuit include pressure switches for measuring and controlling the pressure in the circuit, gauges for displaying the pressure, and so on.

Each of these common devices, essential for the correct operation of the dental unit, is connected to the fluid line through a secondary conduit of its own that is closed off at one end and leads only into the device itself, which is equipped with an internal chamber into which fluid is sucked for testing or other measurement purposes.

The Applicant has conducted extensive research and tests showing that this type of structure produces areas where contaminating agents can collect and which the normal flow of disinfectant / sterilising fluids is unable to flush out during routine operating cycles precisely because the conduit leading into the device is closed off and is therefore not directly affected by fluid flow.

To this must be added the fact that the volume of the chamber inside the device is very large compared to the cross section size of the conduit leading into it. This further favours stagnation of fluid inside the chambers where contaminating agents can thrive.

This leads to the permanent presence of contaminating agents released into the circuit by the devices no matter how frequently cleaning and disinfecting cycles are carried out, thus reducing the level of sterility in the circuit.

The present invention therefore has for an object to overcome the above mentioned drawbacks by providing a water circuit to be built into dental equipment such as dental units and whose structural features are such as to minimise potential contamination due to proliferation of bacteria in areas that are difficult to access by disinfectant / sterilising products but without thereby reducing the performance of the circuit in its entirety.

According to the invention, this object is achieved by a water circuit for dental equipment such as dental units, the water circuit at least comprising a user fluid supply line connected, at one end, to a mains water supply and, at the other end, at least to a first circuit branch for supplying items of equipment at least comprising a plurality of dental handpieces; at least the fluid supply line and the first branch being fitted with devices for checking, regulating, or turning on/shutting off fluid flow; at least one of the devices for checking, regulating, or turning on/shutting off fluid flow being mounted in series on the fluid supply line and on the first branch, in such a way that it is located directly in the stream of the fluid flowing in the supply line and in the first branch.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows a diagram representing a simple water circuit made according to the present invention;
- Figure 2 is a scaled-up detail view of the water circuit of Figure 1.

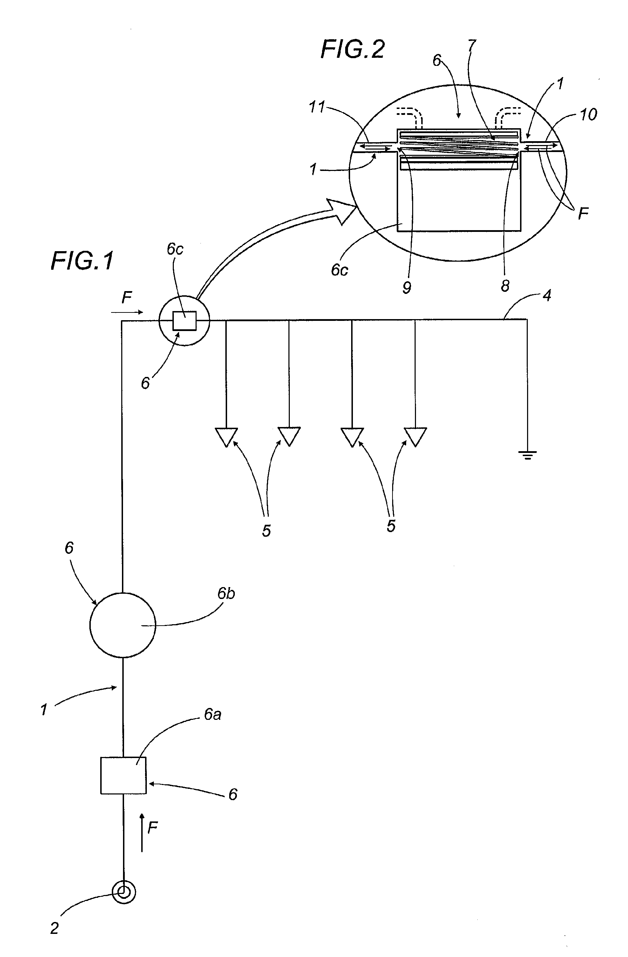

With reference to the accompanying drawings, in particular Figure 1, the water circuit according to the invention is designed to be built into dental equipment such as dental units.

The circuit illustrated is schematically represented only in the main parts of it needed for explanatory purposes and without the solution according to the invention thereby losing its novelty.

The water circuit thus comprises a user fluid F supply line 1 connected, at one end, to a mains water supply 2 and, at the other end, at least to a first branch 3 for supplying items of equipment 5 at least comprising a plurality of dental handpieces 4 (which are not illustrated in detail since they do not strictly form part of the invention).

The fluid F supply line 1 and the first branch 4 are fitted with devices 6 for checking, regulating, or turning on/shutting off the flow of the fluid F. In Figure 1, these devices 6 are schematically represented as blocks and may, purely by way of example, consist of a pressure gauge 6a, a pressure switch 6b and a check valve (or suckback valve) 6c acting on the first branch 4 (all of which are well known to experts in the trade). It will be understood that the devices 6 may vary in number and type and they are illustrated and positioned in the drawing only to better clarify the inventive concept.

Again with reference to Figure 1, at least one of the devices 6 for checking, regulating, or turning on/shutting off fluid flow is mounted in series on the fluid F supply line 1 and at least on the first branch 4, in such a way that the device is located directly in the stream of the fluid F flowing in the supply line 1 and in the first branch 4.

Preferably, but without restricting the scope of the invention, each of the devices 6 for checking, regulating, or turning on/shutting off fluid flow may be mounted in series on the fluid F supply line 1 and on the first branch 4, and that is to say, in such a way that all the devices 6 are located directly in the stream of the fluid F.

As an example of the above mentioned concept, illustrated in Figure 2, each device 6 for checking, regulating, or turning on/shutting off fluid F flow (in this instance a check or suckback valve 6c) has at least one chamber 7 that can be connected to the supply line 1 or to the first branch 4. This chamber 7 has at least two openings 8 and 9 connected to respective sections 10 and 11 of the line 1 or of the first branch 4: this creates an inflow area and outflow area of the fluid F (irrespective of its direction) passing through the chamber 7 which thus forms a section of the line 1 or of the first branch 4 through which the fluid F flows.

Preferably, the two openings 8 and 9 in each chamber 7 are located in substantially opposite positions at the ends of the chamber 7 so that the flow of fluid F crosses and effectively comes into contact with the chamber 7. It will, however, be understood that a connection at the top of the chamber 7 (see dashed line in Figure 2) is also possible and does not reduce the performance and safety of the device 6.

A water circuit made as described above achieves the aforementioned objects thanks to the completely new way in which the devices necessary for the operation of the circuit are arranged.

The new arrangement does not involve a total transformation of the water circuit in terms of constructional architecture and operation since all that is required is to integrate the devices into the circuit, that is to say, the devices become an integral part of the circuit.

This different structural arrangement of the devices permits effective and continuous sanitisation of the chambers forming part of the devices by simply eliminating the problems caused by connecting conduits closed off at one end and without significantly changing the disinfection/sterilisation cycles of the water circuit.

It will be understood that the invention described may be useful in many industrial applications and may be modified and adapted in several ways without thereby departing from the scope of the inventive concept. Moreover, all the details of the invention may be substituted by technically equivalent elements.

## Claims

1. A water circuit for dental equipment such as dental units comprising at least a user fluid (F) supply line (1) connected, at one end, to a mains water supply (2) and, at the other end, at least to a first circuit branch (4) for supplying items of equipment (5) at least comprising a plurality of dental handpieces; at least the fluid (F) supply line (1) and the first branch (4) being fitted with devices (6) for checking, regulating, or turning on/shutting off the flow of the fluid (F); the water circuit being **characterised in that** at least one of the devices (6) for checking, regulating, or turning on/shutting off fluid flow is mounted in series on the fluid (F) supply line (1) or on the first branch (4), in such a way that it is located directly in the stream of the fluid (F) flowing in the supply line (1) and in the first branch (4).

2. The circuit according to claim 1, **characterised in that** all the devices (6) for checking, regulating, or turning on/shutting off the fluid flow are mounted in series on the fluid (F) supply line (1) and on the first branch (4), in such a way that they are located directly in the stream of the fluid (F) flowing in the supply line (1) and in the first branch (4).

3. The circuit according to claim 1, where the device or devices (6) for checking, regulating, or turning on/shutting off the flow of the fluid (F) has at least one chamber (7) that can be connected to the supply line (1) or to the first branch (4), **characterised in that** the chamber (7) has at least two openings (8, 9) connected to respective sections (10, 11) of the line (1) or of the first branch (4) and creating an inflow area and an outflow area of the fluid (F) on the line (1) and on the first branch (4) in such a way that the chamber (7) through which the fluid (F) flows forms a section of the line (1) or of the first branch (4).

4. The circuit according to claim 3, **characterised in that** the openings (8, 9) of the chamber (7) are located in substantially opposite positions at the ends of the chamber (7) so that the flow of fluid (F) crosses and effectively comes into contact with the chamber (7).

5. The circuit according to claim 2, where each of the devices (6) for checking, regulating, or turning on/shutting off the flow of the fluid (F) has at least one chamber (7) that can be connected to the supply line (1) or to the first branch (4), **characterised in that** the chamber (7) has at least two openings (8, 9) connected to respective sections (10, 11) of the line (1) or of the first branch (4) and creating an inflow area and an outflow area of the fluid (F) on the line (1) and on the first branch (4) in such a way that the chamber (7) through which the fluid (F) flows forms a section of the line (1) or of the first branch (4).

6. The circuit according to claim 5, **characterised in that** the openings (8, 9) of each chamber (7) are located in substantially opposite positions at the ends of the chamber (7) so that the flow of fluid (F) crosses and effectively comes into contact with the chamber (7).
